# NOUVEAU FASCICULE DE BREVET EUROPEEN

(11) **EP 0 767 758 B2**
(45) Date de publication et mention de la décision concernant l'opposition: **25.11.2009**
(45) Mention de la délivrance du brevet: 19.01.2000
(21) Numéro de dépôt: 96910063.5
(22) Date de dépôt: 28.03.1996
(51) Int. Cl.: C01B 33/193, C09C 1/30, C08K 3/36

(54) **NOUVEAU PROCEDE DE PREPARATION DE SILICE PRECIPITEE, NOUVELLES SILICES PRECIPITEES CONTENANT DU ZINC ET LEUR UTILISATION AU RENFORCEMENT DES ELASTOMERES**
VERFAHREN ZUR HERSTELLUNG VON FÄLLUNGSKIESELSÄURE, ZINKENTHALTENDEN FÄLLUNGSKIESELSÄUREN UND DEREN VERWENDUNG ZUR VERSTÄRKUNG VON ELASTOMEREN
NOVEL METHOD FOR PREPARING PRECIPITATED SILICA, NOVEL ZINC-CONTAINING PRECIPITATED SILICAS, AND USE THEREOF FOR REINFORCING ELASTOMERS

(30) Priorité: 29.03.1995 FR 9503676
(43) Date de publication de la demande: 16.04.1997
(73) Titulaire: RHODIA CHIMIE, 92408 Courbevoie Cédex (FR)
(72) Inventeur: BOMAL, Yves, F-75018 Paris (FR); CHEVALLIER, Yvonick, F-69270 Fontaines-Saint-Martin (FR); PRAT, Evelyne, F-93500 Pantin (FR)
(74) Mandataire: Delenne, Marc
(86) Numéro de dépôt international: PCT/FR1996/000462
(87) Numéro de publication internationale: WO 1996/030302

(56) Documents cités:
- EP-A- 0 493 263
- EP-A- 0 520 862
- DE-A- 1 467 012
- DE-A- 69 105 191
- DE-A- 69 230 959
- FR-A- 2 303 763
- US-A- 4 040 858

## Description

La présente invention concerne un nouveau procédé de préparation de silice précipitée.

On sait que la silice précipitée est utilisée depuis longtemps comme charge blanche renforçante dans les élastomères.

Cependant, comme toute charge renforçante, il convient qu'elle puisse se manipuler d'une part, et surtout s'incorporer d'autre part, facilement dans les mélanges.

On sait, d'une manière générale, que pour obtenir les propriétés de renforcement optimales conférées par une charge, il convient que cette dernière soit présente dans la matrice élastomère sous une forme finale qui soit à la fois la plus finement divisée possible et répartie de la façon la plus homogène possible. Or, de telles conditions ne peuvent être réalisées que dans la mesure où, d'une part, la charge présente une très bonne aptitude à s'incorporer dans la matrice lors du mélange avec l'élastomère (incorporabilité de la charge) et à se désagréger ou se désagglomérer sous la forme d'une poudre très fine (désagrégation de la charge), et où, d'autre part, la poudre issue du processus de désagrégation précité peut elle-même, à son tour, se disperser parfaitement et de façon homogène dans l'élastomère (dispersion de la poudre).

De plus, pour des raisons d'affinités réciproques, les particules de silice ont une fâcheuse tendance, dans la matrice élastomère, à s'agglomérer entre elles. Ces interactions silice/silice ont pour conséquence néfaste de limiter les propriétés de renforcement à un niveau sensiblement inférieur à celui qu'il serait théoriquement possible d'atteindre si toutes les interactions silice/élastomère susceptibles d'être créées pendant l'opération de mélange, étaient effectivement obtenues (ce nombre théorique d'interactions silice/élastomère étant, comme cela est bien connu, directement proportionnel à la surface externe, de la silice utilisée).

En outre, de telles interactions silice/silice tendent, à l'état cru, à augmenter la raideur et la consistance des mélanges, rendant ainsi leur mise en oeuvre plus difficile.

Le problème se pose de disposer de charges qui, tout en pouvant avoir une taille relativement élevée, améliorent les propriétés rhéologiques des élastomères et présentent avantageusement une bonne aptitude à la dispersion dans les élastomères.

La présente invention a pour but d'obvier aux inconvénients précités et de résoudre le problème sus-mentionné.

Plus précisément, elle a notamment pour but de proposer un nouveau procédé de préparation de silice précipitée ayant, de manière avantageuse, une bonne aptitude à la dispersion (et à la désagglomération) et des propriétés renforçantes très satisfaisantes, en particulier qui, utilisées à titre de charge renforçante pour élastomères, confère à ces derniers d'excellentes propriétés rhéologiques tout en leur procurant de bonnes propriétés mécaniques.

Dans l'exposé qui suit, la surface spécifique BET est déterminée selon la méthode de BRUNAUER - EMMET - TELLER décrite dans "The journal of the American Chemical Society", Vol. 60, page 309, février 1938 et correspondant à la norme NFT 45007 (novembre 1987).

La surface spécifique CTAB est la surface externe déterminée selon la norme NFT 45007 (novembre 1987) (5.12).

La prise d'huile DOP est déterminée selon la norme NFT 30-022 (mars 1953) en mettant en oeuvre le dioctylphtalate.

La densité de remplissage à l'état tassé (DRT) est mesurée selon la norme NFT-030100.

Le pH est mesuré selon la norme ISO 787/9 (pH d'une suspension à 5 % dans l'eau).

On précise enfin que les volumes poreux donnés sont mesurés par porosimétrie au mercure, les diamètres de pores étant calculés par la relation de WASHBURN avec un angle de contact théta égal à 130° et une tension superficielle gamma égale à 484 Dynes/cm (porosimètre MICROMERITICS 9300).

L'aptitude à la dispersion et à la désagglomération des silices peut être quantifiée au moyen d'un test spécifique de désagglomération.

Le test de désagglomération est réalisé selon le protocole suivant :

la cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), équipé d'une sonde de diamètre 19 mm. La mesure granulométrique est effectuée par diffraction laser sur un granulomètre SYMPATEC.

On pèse dans un pilulier (hauteur: 6 cm et diamètre : 4 cm) 2 grammes de silice et l'on complète à 50 grammes par ajout d'eau permutée : on réalise ainsi une suspension aqueuse à 4 % de silice qui est homogénéisée pendant 2 minutes par agitation magnétique. On procède ensuite à la désagglomération sous ultra-sons comme suit : la sonde étant immergée sur une longueur de 4 cm, on règle la puissance de sortie de manière à obtenir une déviation de l'aiguille du cadran de puissance indiquant 20 % (ce qui correspond à une énergie dissipée par l'embout de la sonde de 120 Watt/cm²). La désagglomération est effectuée pendant 420 secondes. On réalise ensuite la mesure granulométrique après avoir introduit dans la cuve du granulomètre un volume (exprimé en ml) connu de la suspension homogénéisée.

La valeur du diamètre médian Ø₅₀ que l'on obtient est d'autant plus faible que la silice présente une aptitude à la désagglomération élevée. On détermine également le rapport (10 x volume de suspension introduite (en ml))/densité optique de la suspension détectée par le granulomètre (cette densité optique est de l'ordre de 20). Ce rapport est indicatif du taux de fines, c'est-à-dire du taux de particules inférieures à 0,1 µm qui ne sont pas détectées par le granulomètre. Ce rapport appelé facteur de désagglomération aux ultra-sons (F_{D}) est d'autant plus élevé que la silice présente une aptitude à la désagglomération élevée.

L'objet de l'invention est un procédé de préparation de silice précipitée selon la revendication 1.

Il a été ainsi trouvé que l'introduction de zinc, et ce selon une méthode particulière, combinée à une concentration faible en silicate (exprimée en SiO₂) et en électrolyte dans le pied de cuve initial et à un taux approprié de matière sèche de la suspension à sécher constituait une condition importante pour conférer aux produits obtenus leurs très bonnes propriétés, notamment des propriétés renforçantes très satisfaisantes (en particulier au niveau de la rhéologie des élastomères) et préférentiellement une aptitude à la dispersion remarquable.

Il est à noter, d'une manière générale, que le procédé concerné est un procédé de synthèse de silice de précipitation, c'est-à-dire que l'on fait agir, dans des conditions très particulières, un agent acidifiant sur un silicate.

Le choix de l'agent acidifiant et du silicate se fait d'une manière bien connue en soi.

On peut rappeler que l'on utilise généralement comme agent acidifiant un acide minéral fort tel que l'acide sulfurique, l'acide nitrique ou l'acide chlorhydrique, ou un acide organique tel que l'acide acétique, l'acide formique ou l'acide carbonique.

L'agent acidifiant peut être dilué ou concentré ; sa normalité peut être comprise entre 0,4 et 36 N, par exemple entre 0,6 et 1,5 N.

En particulier, dans le cas où l'agent acidifiant est l'acide sulfurique, sa concentration peut être comprise entre 40 et 180 g/l, par exemple entre 60 et 130 g/l.

On peut par ailleurs utiliser en tant que silicate toute forme courante de silicates tels que métasilicates, disilicates et avantageusement un silicate de métal alcalin, notamment le silicate de sodium ou de potassium.

Le silicate peut présenter une concentration exprimée en silice comprise entre 40 et 330 g/l, par exemple entre 60 et 300 g/l, en particulier entrte 60 et 250 g/l.

De manière générale, on emploie, comme agent acidifiant, l'acide sulfurique, et, comme silicate, le silicate de sodium.

Dans le cas où l'on utilise le silicate de sodium, celui-ci présente, en général, un rapport pondéral SIO₂/Na₂O compris entre 2 et 4, par exemple entre 3,0 et 3,7.

En ce qui concerne plus particulièrement le procédé de préparation de l'invention, la précipitation se fait d'une manière spécifique selon les étapes suivantes.

On forme tout d'abord un pied de cuve qui comprend du silicate ainsi qu'un électrolyte (étape (i)). La quantité de silicate présente dans le pied de cuve initial ne représente avantageusement qu'une partie de la quantité totale de silicate engagée dans la réaction.

Le terme électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le sulfate de sodium dans le cas de la réaction d'un silicate de sodium avec l'acide sulfurique.

Selon une caractéristique du procédé de préparation selon l'invention, la concentration en électrolyte dans le pied de cuve initial est (supérieure à 0 g/l et) inférieure à 17 g/l, de préférence inférieure à 14 g/l.

Selon une autre caractéristique du procédé de préparation selon l'invention, la concentration en silicate dans le pied de cuve initial est (supérieure à 0 g/l et) inférieure à 100 g de SiO₂ par litre. De préférence, cette concentration est inférieure à 90 g/l, notamment à 85 g/l. Elle peut dans certains cas être inférieure à 80 g/l.

La deuxième étape consiste à ajouter l'agent acidifiant dans le pied de cuve de composition décrite plus haut (étape (ii)).

Cette addition qui entraîne une baisse corrélative du pH du milieu réactionnel se fait jusqu'à ce qu'on atteigne une valeur du pH d'au moins environ 7, généralement comprise entre 7 et 8.

Une fois qu'est atteinte la valeur souhaitée de pH, on procède alors à une addition simultanée (étape (iii)) d'agent acidifiant et de silicate.

Cette addition simultanée est de préférence réalisée de manière telle que la valeur du pH soit constamment égale (à +/- 0,1 près) à celle atteinte à l'issue de l'étape (ii).

Selon une caractéristique essentielle du procédé de préparation selon l'invention, celui-ci comprend une des deux opérations (a) ou (b) mentionnées précédemment, c'est-à-dire :
(a) on ajoute, après l'étape (iii), au milieu réactionnel au moins un composé du zinc, puis un agent basique, et, lorsque la séparation, mise en oeuvre dans le procédé, comporte une filtration et un délitage du gâteau issu de cette filtration, ledit délitage est de préférence effectué en présence d'au moins un composé de l'aluminium, ou
(b) on ajoute, après l'étape (iii), au milieu réactionnel simultanément un silicate et au moins un composé du zinc et, lorsque la séparation, mise en oeuvre dans le procédé, comporte une filtration et un délitage du gâteau issu de cette filtration, le délitage est de préférence effectué en présence d'au moins un composé de l'aluminium.

Dans une première variante du procédé de préparation selon l'invention (c'est-à-dire lorsque celui-ci comprend l'opération (a)), on effectue avantageusement, après avoir réalisé la précipitation selon les étapes (i), (ii) et (iii) précédemment décrites, les étapes successives suivantes :
(iv) on ajoute au milieu réactionnel (c'est-à-dire à la suspension ou bouillie réactionnelle obtenue) au moins un composé du zinc,
(v) on ajoute au milieu réactionnel un agent basique, de préférence jusqu'à l'obtention d'une valeur du pH du milieu réactionnel comprise entre 7,4 et 10, en particulier entre 7,8 et 9,
(vi) on ajoute au milieu réactionnel de l'agent acidifiant, de préférence jusqu'à l'obtention d'une valeur du pH du milieu réactionnel d'au moins 7, en particulier comprise entre 7 et 8,5, par exemple entre 7 et 8.

Il peut être alors avantageux d'effectuer, après l'addition simultanée de l'étape (iii), un mûrissement du milieu réactionnel, ce mûrissement pouvant par exemple durer de 1 à 60 minutes, en particulier de 3 à 30 minutes.

Dans cette première variante, il peut être souhaitable, entre l'étape (iii) et l'étape (iv), et notamment avant ledit mûrissement éventuel, d'ajouter au milieu réactionnel une quantité supplémentaire d'agent acidifiant. Cette addition se fait généralement jusqu'à l'obtention d'une valeur du pH du milieu réactionnel comprise entre 3 et 6,5, en particulier entre 4 et 6.

L'agent acidifiant utilisé lors de cette addition est généralement identique à celui employé lors des étapes (ii), (iii) et (vi) de la première variante du procédé de préparation selon l'invention.

Un mûrissement du milieu réactionnel est habituellement effectué entre l'étape (v) et l'étape (vi), par exemple pendant 2 à 60 minutes, en particulier pendant 5 à 45 minutes.

De même, un mûrissement du milieu réactionnel est le plus souvent effectué après l'étape (vi), par exemple pendant 2 à 60 minutes, en particulier pendant 5 à 30 minutes.

L'agent basique utilisé lors de l'étape (iv) peut être une solution d'ammoniaque ou, de préférence, une solution d'hydroxyde de sodium (ou soude).

Dans une seconde variante du procédé de préparation selon l'invention (c'est-à-dire lorsque celui-ci comprend l'opération (b)), on effectue, après les étapes (i), (ii) et (iii) précédemment décrites, une étape (iv) qui consiste à ajouter au milieu réactionnel simultanément un silicate et au moins un composé du zinc.

Il peut être alors avantageux d'effectuer, après l'addition simultanée de l'étape (iv), un mûrissement du milieu réactionnel, ce mûrissement pouvant par exemple durer de 2 à 60 minutes, en particulier de 5 à 30 minutes.

Dans cette seconde variante, il peut être souhaitable, après l'étape (iv), et notamment après ce mûrissement éventuel, d'ajouter au milieu réactionnel une quantité supplémentaire d'agent acidifiant. Cette addition se fait généralement jusqu'à l'obtention d'une valeur du pH du milieu réactionnel d'au moins 7, en particulier comprise entre 7 et 8,5, par exemple entre 7 et 8.

L'agent acidifiant utilisé lors de cette addition est généralement identique à celui employé lors des étapes (ii) et (iii) de la seconde variante du procédé de préparation selon l'invention.

Un mûrissement du milieu réactionnel est habituellement effectué après cette addition d'agent acidifiant, par exemple pendant 1 à 60 minutes, en particulier pendant 3 à 30 minutes.

Le composé de zinc employé dans le procédé de préparation selon l'invention est en général un sel organique ou inorganique de zinc.

A titre d'exemples de sel organique, on peut citer notamment les sels d'acides carboxyliques ou polycarboxyliques, comme les sels d'acide acétique, citrique, tartrique ou oxalique.

A titre d'exemples de sel inorganique, on peut citer notamment les halogénures et les oxyhalogénures (comme les chlorures, les oxychlorures), les nitrates, les phosphates, les sulfates et les oxysulfates.

Dans la pratique, le composé du zinc peut être utilisé sous la forme d'une solution, en général aqueuse.

De préférence, on emploie à titre de composé du zinc un sulfate de zinc.

La température du milieu réactionnel est généralement comprise entre 70 et 98 °C.

Selon une variante de l'invention, la réaction est effectuée à une température constante comprise entre 75 et 96 °C.

Selon une autre variante (préférée) de l'invention, la température de fin de réaction est plus élevée que la température de début de réaction : ainsi, on maintient la température au début de la réaction de préférence entre 70 et 96 °C, puis on augmente la température en quelques minutes, de préférence jusqu'à une valeur comprise entre 80 et 98 °C, valeur à laquelle elle est maintenue jusqu'à la fin de la réaction ; les opérations (a) ou (b) sont ainsi habituellement effectuées à cette valeur constante de température.

On obtient, à l'issue des étapes qui viennent d'être décrites, une bouillie de silice qui est ensuite séparée (séparation liquide-solide).

Dans la première variante du procédé de préparation selon l'invention (c'est-à-dire lorsque celui-ci comprend l'opération (a)), cette séparation comporte, en général, une filtration (suivie d'un lavage si nécessaire) et un délitage, ledit délitage étant de préférence effectué en présence d'au moins un composé de l'aluminium et, de préférence, en présence d'un agent acidifiant tel que décrit précédemment (dans ce dernier cas, le composé de l'aluminium et l'agent acidifiant sont avantageusement ajoutés de manière simultanée).

L'opération de délitage, qui peut être réalisée par exemple par passage du gâteau de filtration dans un broyeur de type colloïdal ou à bille, permet notamment d'abaisser la viscosité de la suspension à sécher ultérieurement.

Dans la seconde variante du procédé de préparation selon l'invention (c'est-à-dire lorsque celui-ci comprend l'opération (b)), la séparation comporte aussi, en général, une filtration (suivie d'un lavage si nécessaire) et un délitage, ledit délitage étant de préférence effectué en présence d'au moins un composé de l'aluminium et, en général, en présence d'un agent acidifiant tel que décrit précédemment (dans ce dernier cas, le composé de l'aluminium et l'agent acidifiant sont avantageusement ajoutés de manière simultanée).

Le composé de l'aluminium consiste, en général, en un aluminate de métal alcalin, notamment de potassium ou, de manière très préférée, de sodium.

De préférence, la quantité de composé du zinc utilisée dans le procédé de préparation selon l'invention est telle que la silice précipitée préparée contient entre 1 et 5 %, en particulier entre 1,5 et 4 %, par exemple entre 1,5 et 2,5 %, en poids de zinc.

La séparation mise en oeuvre dans le procédé de préparation selon l'invention comprend habituellement une filtration effectuée au moyen de toute méthode convenable, par exemple au moyen d'un filtre à bande, d'un filtre rotatif sous vide ou, de préférence, d'un filtre presse.

La suspension de silice précipitée ainsi récupérée (gâteau de filtration) est ensuite séchée.

Selon une caractéristique du procédé de préparation selon l'invention, cette suspension doit présenter immédiatement avant son séchage un taux de matière sèche d'au plus 24 % en poids, de préférence d'au plus 22 % en poids.

Ce séchage peut se faire selon tout moyen connu en soi.

De préférence, le séchage se fait par atomisation.

A cet effet, on peut utiliser tout type d'atomiseur convenable, notamment un atomiseur à turbines, à buses, à pression liquide ou à deux fluides.

Selon un mode de réalisation de l'invention, la suspension à sécher présente un taux de matière sèche supérieur à 15 % en poids, de préférence supérieur à 17 % en poids et, par exemple, supérieur à 20 % en poids. Le séchage est alors de préférence effectué au moyen d'un atomiseur à buses.

La silice précipitée susceptible d'être obtenue selon ce mode de réalisation de l'invention et de préférence en mettant en oeuvre un filtre presse se présente avantageusement sous forme de billes sensiblement sphériques, de préférence d'une taille moyenne d'au moins 80 µm.

Il est à noter que l'on peut également, après la filtration, à une étape ultérieure du procédé, rajouter au gâteau de filtration de la matière sèche, par exemple de la silice sous forme pulvérulente.

A l'issue du séchage, on peut procéder à une étape de broyage sur le produir récupéré, notamment sur le produit obtenu par séchage de suspension présentant un taux de matière sèche supérieur à 15 % en poids. La silice précipitée qui est alors susceptible d'être obtenue se présente généralement sous forme d'une poudre, de préférence de taille moyenne d'au moins 15 µm, en particulier comprise entre 15 et 60 µm, par exemple entre 20 et 45 µm.

Les produits broyés à la granulométrie désirée peuvent être séparés des éventuels produits non conformes au moyen par exemple de tamis vibreurs présentant des tailles de maille appropriées, et les produits non conformes ainsi récupérés être renvoyés au broyage.

De même, selon un autre mode de réalisation de l'invention, la suspension à sécher présente un taux de matière sèche d'au plus 15 % en poids. Le séchage est alors en général effectué au moyen d'un atomiseur à turbines. La silice précipitée qui est alors susceptible d'être obtenue selon ce mode de réalisation de l'invention et de préférence en mettant en oeuvre un filtre rotatif sous vide se présente généralement sous la forme d'une poudre, de préférence de taille moyenne d'au moins 15 µm, en particulier comprise entre 30 et 150 µm, par exemple entre 45 et 120 µm.

Enfin, le produit séché (notamment à partir d'une suspension ayant un taux de matière sèche d'au plus 15 % en poids) ou broyé peut, selon un autre mode de réalisation de l'invention, être soumis à une étape d'agglomération.

On entend ici par agglomération tout procédé qui permet de lier entre eux des objets finement divisés pour les amener sous la forme d'objets de plus grande taille et résistant mieux mécaniquement.

Ces procédés sont notamment la compression directe, la granulation voie humide (c'est-à-dire avec utilisation d'un liant tel que eau, slurry de silice, ...), l'extrusion et, de préférence, le compactage à sec.

Lorsque l'on met en oeuvre cette dernière technique, il peut s'avérer avantageux, avant de procéder au compactage, de désaérer (opération aussi appelée pré-densification ou dégazage) les produits pulvérulents de manière à éliminer l'air inclus dans ceux-ci et assurer un compactage plus régulier.

La silice précipitée susceptible d'être obtenue selon ce mode de réalisation de l'invention se présente avantageusement sous la forme de granulés, de préférence de taille d'au moins 1 mm, en particulier comprise entre 1 et 10 mm.

A l'issue de l'étape d'agglomération, les produits peuvent être calibrés à une taille désirée, par exemple par tamisage, puis conditionnés pour leur utilisation future.

Les poudres, de même que les billes, de silice précipitée obtenues par le procédé selon l'invention offrent ainsi l'avantage, entre autre, d'accéder de manière simple, efficace et économique à des granulés tels que précités, notamment par des opérations classiques de mise en forme, telles que par exemple une granulation ou un compactage, sans que ces dernières n'entraînent de dégradations susceptibles de masquer, voire annihiler, les bonnes propriétés intrinsèques attachées à ces poudres ou ces billes, comme cela peut être le cas dans l'art antérieur en mettant en oeuvre des poudres classiques.

Les silices précipitées obtenues par le procédé selon l'invention ont, de manière avantageuse, une bonne aptitude à la dispersion (et à la désagglomération) et des propriétés renforçantes très satisfaisantes, en particulier qui, utilisées à titre de charge renforçante pour élastomères, confère à ces derniers d'excellentes propriétés rhéologiques tout en leur procurant de bonnes propriétés mécaniques.

La silice précipitée obtenue par le procédé selon l'invention caractérisée en ce qu'elle présente :
- une surface spécifique CTAB comprise entre 90 et 250 m²/g, par exemple entre 120 et 230 m²/g,
- une surface spécifique BET comprise entre 90 et 250 m²/g, par exemple entre 120 et 240 m²/g,
- une prise d'huile DOP inférieure à 300 ml/100g, de préférence comprise entre 200 et 295 ml/100g,
- une teneur en zinc comprise entre 1 et 5 % en poids, de préférence entre 1,5 et 4 % en poids,
et en ce que le nombre N de molécules d'acide stéarique consommées par nm² de surface de silice, lorsque l'on fait réagir de l'acide stéarique avec de ladite silice dans du xylène pendant 2 heures à 120 °C, est d'au moins 1, de préférence d'au moins 1,2, en particulier d'au moins 1,5.

La silice obtenue par le procédé selon l'invention présente, de manière préférée, une teneur en zinc comprise entre 1,5 et 4 % en poids ; cette teneur peut être notamment comprise entre 1,5 et 2,5 % en poids.

Une des caractéristiques essentielles de la silice précipitée obtenue par le procédé selon l'invention est sa consommation, en milieu modèle (le xylène), d'un ingrédient de vulcanisation du caoutchouc (l'acide stéarique).

La Demanderesse a ainsi constaté que les silices précipitées obtenues par le procédé selon l'invention présentant un nombre N particulier, en combinaison avec les autres caractéristiques mentionnées dans le présent exposé, permettaient notamment de conférer aux élastomères d'excellentes propriétés rhéologiques tout en leur procurant des propriétés mécaniques satisfaisantes.

Pour déterminer cette caractéristique (nombre N), on fait réagir de l'acide stéarique en présence de la silice dans du xylène, pendant 2 heures à 120 °C. Puis, on dose par spectrométrie infra-rouge (IR) la quantité d'acide stéarique restant dans le xylène après réaction ; on peut alors déduire la quantité d'acide stéarique qui a été consommée par la silice, et donc le nombre N de molécules d'acide stéarique consommées par nm² de surface de la silice.

On décrit plus précisément ci-dessous le mode opératoire utilisé pour déterminer cette caractéristique.

On ajoute 60,2 g (soit 70 ml) de xylène dans un ballon contenant 3,17 g d'acide stéarique. On bouche le ballon, puis on le place sous agitation magnétique pendant quelques minutes.

On ajoute ensuite 12,04 g de silice.

On place le ballon dans un bain d'huile à 120 °C, sous reflux (en y adaptant un réfrigérant). On met alors le ballon sous agitation magnétique pendant 105 mn. Puis on arrête l'agitation et on laisse encore le ballon dans le bain d'huile pendant 15 mn. La durée totale de la réaction à 120 °C est donc de 2 heures.

On retire le réfrigérant et on sort le ballon du bain d'huile.

On filtre le contenu du ballon sur un système de microfiltration (ensemble MILLIPORE avec filtres à membranes DURAPORE en fluorure de polyvinylidène (dimension des pores : 0,45 µm)).

On dilue ensuite, dans 10 g de xylène, 10 g du filtrat obtenu : on obtient une solution S.

Parallèlement, on prépare des solutions étalon d'acide stéarique dans le xylène (ayant un taux d'acide stéarique inférieur à 2 % en masse) et on réalise les spectres IR (de 400 à 4000 cm⁻¹) de chacunes d'entre elles. Le pic caractéristique de l'acide stéarique se situe à 1710 cm⁻¹. L'amplitude de ce pic associé au taux d'acide stéarique de la solution permet de tracer la droite du taux d'acide stéarique de la solution en fonction de l'absorbance IR à 1710 cm⁻¹ ; par régression linéaire, on obtient l'équation de la droite d'étalonnage.

De même, on réalise le spectre IR de la solution S. La valeur du pic caractéristique de l'acide stéarique ramenée à l'équation de la droite d'étalonnage permet de déterminer le taux d'acide stéarique présente dans la solution S ; en tenant compte de la masse de xylène ajouté lors de la dilution, on obtient le taux d'acide stéarique du filtrat de la réaction. Le taux et donc la quantité d'acide stéarique consommé par la silice au cours de la réaction se déduisent du taux d'acide stéarique initial et du taux d'acide stéarique après réaction (celui-ci étant le taux a'acide stéarique du filtrat) . On détermine alors le nombre N de molécules d'acide stéarique consommées par nm² de surface de la silice.

Le zinc contenu dans la silice précipitée obtenue par le procédé selon l'invention n'est pas, de manière préférée, sous forme cristallisée, mais se présente plutôt sous forme amorphe (ceci peut être déterminé par diffraction des rayons X).

Selon une variante (préférée) de l'invention, la silice précipitée obtenue présente :
- une surface spécifique CTAB comprise entre 90 et 185 m²/g, en particulier 120 et 185 m²/g, par exemple entre 140 et 180 m²/g,
- un diamètre médian (Ø₅₀), après désagglomération aux ultra-sons, inférieur à 4 µm, de préférence inférieur à 3 µm,
- un facteur de désagglomération aux ultra-sons (F_{D}) supérieur à 6 ml, de préférence supérieur à 10 ml.

Le diamètre médian (Ø₅₀), après désagglomération aux ultra-sons, de la silice précipitée obtenue selon cette variante de l'invention peut être inférieur à 2,8 µm, par exemple inférieur à 2,5 µm.

Le facteur de désagglomération aux ultra-sons (F_{D}) de la silice précipitée obtenue selon cette variante de l'invention peut être supérieur à 11 ml, par exemple supérieur à 14 ml.

La surface spécifique BET de la silice précipitée obtenue selon cette variante de l'invention est comprise, en général, entre 90 et 195 m²/g, en particulier entre 120 et 195 m²/g, par exemple entre 150 et 190 m²/g.

Selon une autre variante de l'invention, la silice précipitée obtenue présente :
- une surface spécifique CTAB supérieure à 185 m²/g et inférieure à 220 m²/g,
- un diamètre médian (Ø₅₀), après désagglomération aux ultra-sons, inférieur à 7 µm, de préférence inférieur à 5,5 µm.

Le diamètre médian (Ø₅₀), après désagglomération aux ultra-sons, de la silice précipitée obtenue selon cette variante de l'invention peut être inférieur à 4 µm.

Le facteur de désagglomération aux ultra-sons (F_{D}) de la silice précipitée obtenue selon cette variante de l'invention peut être supérieur à 6 ml.

La surface spécifique BET de la silice précipitée obtenue selon cette variante de l'invention est comprise, en général, entre 185 et 230 m²/g.

Selon un mode particulier de réalisation de l'invention, une des caractéristiques de la silice obtenue peut également résider dans la distribution, ou répartition, du volume poreux, et notamment dans la distribution du volume poreux qui est généré par les pores de diamètres inférieurs ou égaux à 400 Å. Ce dernier volume correspond au volume poreux utile des charges qui sont employées dans le renforcement des élastomères. L'analyse des porogrammes montre qu'alors la silice obtenue selon un mode particulier de l'invention possède une distribution poreuse telle que le volume poreux constitué par les pores dont le diamètre est compris entre 175 et 275 Å représente au moins 50 %, par exemple au moins 60 %, du volume poreux constitué par les pores de diamètres inférieurs ou égaux à 400 Å.

Selon une variante très préférée de l'invention, la silice obtenue possède un rapport surface spécifique BET / surface spécifique CTAB compris entre 1,0 et 1,2, c'est-à-dire qu'elle présente de préférence une faible microporosité.

Le pH de la silice obtenue est, en général, compris entre 8,0 et 9,0, par exemple entre 8,3 et 8,9.

Les silices obtenues peuvent se présenter sous forme de poudre, de billes sensiblement sphériques ou, éventuellement, de granulés et sont notamment caractérisées par le fait que, tout en ayant une taille relativement élevée, elles présentent des propriétés renforçantes très satisfaisantes et, de préférence, une excellente aptitude à la dispersion et à la désagglomération. Elles peuvent ainsi présenter ainsi une aptitude à la dispersion et à la désaggglomération avantageusement supérieure, à surface spécifique identique ou proche et à taille identique ou proche, à celle des silices de l'art antérieur.

Les poudres de silice obtenue présentent préférentiellement une taille moyenne d'au moins 15 µm ; celle-ci est par exemple comprise entre 15 et 60 µm (notamment entre 20 et 45 µm) ou entre 30 et 150 µm (notamment entre 45 et 120 µm).

Elles possèdent, de manière préférée, une prise d'hulie DOP comprise entre 240 et 290 ml/100g.

La densité de remplissage à l'état tassé (DRT) desdites poudres est, en général, d'au moins 0,17, et, par exemple, comprise entre 0,2 et 0,3.

Lesdites poudres présentent généralement un volume poreux total d'au moins 2,5 cm³/g, et, plus particulièrement, compris entre 3 et 5 cm³/g.

Elles permettent notamment d'obtenir un très bon compromis mise en oeuvre/propriétés mécaniques à l'état vulcanisé.

Elles constituent aussi des précurseurs privilégiés pour la synthèse de granulés tels que décrits plus loin.

Les billes sensiblement sphériques obtenues selon l'invention présentent préférentiellement une taille moyenne d'au moins 80 µm.

Selon certaines variantes de l'invention, cette taille moyenne des billes est d'au moins 100 µm, par exemple d'au moins 150 µm ; elle est généralement d'au plus 300 µm et se situe de préférence entre 100 et 270 µm. Cette taille moyenne est déterminée selon la norme NF X 11507 (décembre 1970) par tamisage à sec et détermination du diamètre correspondant à un refus cumulé de 50 %.

Elles possèdent, de manière préférée, une prise d'hulie DOP comprise entre 240 et 290 ml/100g.

La densité de remplissage à l'état tassé (DRT) desdites billes (ou perles) est, en général, d'au moins 0,17, et, par exemple, comprise entre 0,2 et 0,34.

Elles présentent habituellement un volume poreux total d'au moins 2,5 cm³/g, et plus particulièrement, compris entre 3 et 5 cm³/g.

Comme indiqué ci-avant, une telle silice sous forme de billes sensiblement sphériques, avantageusement pleines, homogènes, peu poussièrantes et de bonne coulabilité, présente, de préférence, une très bonne aptitude à la désagglomération et à la dispersion. En outre, elle présente de bonnes propriétés renforçantes.

Les dimensions des granulés obtenus selon l'invention sont préférentiellement d'au moins 1 mm, en particulier comprises entre 1 et 10 mm, selon l'axe de leur plus grande dimension (longueur).

Ils possèdent, de manière préférée, une prise d'hulie DOP comprise entre 200 et 260 ml/100g.

Lesdits granulés peuvent se présenter sous des formes les plus diverses. A titre d'exemple, on peut notamment citer les formes sphérique, cylindrique, parallélépipédique, de pastille, de plaquette, de boulette, d'extrudé à section circulaire ou polylobée.

La densité de remplissage à l'état tassé (DRT) desdits granulés est en général d'au moins 0,27 et peut aller jusqu'à 0,37.

Ils présentent généralement un volume poreux total d'au moins 1 cm³/g, et, plus particulièrement, entre 1,5 et 2 cm³/g.

Les silices préparées par le procédé selon l'invention trouvent une application particulièrement intéressante dans le renforcement des élastomères, naturels ou synthétiques. Elles confèrent à ces élastomères d'excellentes propriétés rhéologiques tout en leur procurant de bonnes propriétés mécaniques et, en général, une bonne résistance à l'abrasion. De plus, ces élastomères sont alors de préférence sujets à un échauffement réduit.

Les silices préparées par le procédé selon l'invention sont utilisables pour améliorer les propriétés rhéologiques (illustrées, par exemple, par la consistance MOONEY, le couple mini) des élastomères.

Les exemples suivants illustrent l'invention sans toutefois en limiter la portée.

### EXEMPLE 1 (comparatif)

On prépare une silice (référencée A1) conformément à l'exemple 12 de la demande de brevet européen EP-A-0520862 (n° de dépôt 92401677.7).

Les caractéristiques de la silice obtenue A1 sous forme de billes sensiblement sphériques sont les suivantes :
- surface spécifique CTAB 160 m²/g
- surface spécifique BET 170 m²/g
- prise d'huile DOP 276 ml/100g
- teneur pondéral en zinc < 0,005 %
- volume poreux V1 représenté par les pores de d ≤ 400 Å 0,90 cm³/g
- volume poreux V2 représenté par les pores 175 Å ≤ d ≤ 275 Å 0,55 cm³/g
- rapport V2/V1 61 %
- pH 6,5
- taille moyenne des particules 260 µm

Le nombre N de molécules d'acide stéarique consommées par nm² de surface de silice, lorsque l'on fait réagir de l'acide stéarique avec de ladite silice A1 dans du xylène pendant 2 heures à 120 °C (conformément au mode opératoire exposé dans la description) est égal à 0,5.

On soumet la silice A1 au test de désagglomération tel que défini précédemment dans la description.

Après désagglomération aux ultra-sons, elle présente un diamètre médian (Ø₅₀) de 4,3 µm et un facteur de désagglomération aux ultra-sons (F_{D}) de 6,5 ml.

### EXEMPLE 2

Dans un réacteur en acier inoxydable muni d'un système d'agitation par hélices et d'un chauffage par double enveloppe, on introduit:
- 624 litres d'eau
- 11,2 kg de Na₂SO₄
- 310 litres de silicate de sodium aqueux, présentant un rapport pondéral SiO₂/Na₂O égal à 3,45 et une densité à 20 °C égal à 1,230.

La concentration en silicate exprimée en SiO₂ dans le pied de cuve initial est alors de 79 g/l. Le mélange est alors porté à une température de 80 °C tout en le maintenant sous agitation. On y introduit alors, à un débit de 7,0 I/mn, de l'acide sulfurique dilué de densité à 20 °C égale à 1,050 jusqu'à obtenir dans le milieu réactionnel une valeur de pH (mesurée à sa température) égale à 8,0. La température de la réaction est de 80 °C pendant les 30 premières minutes ; elle est ensuite portée de 80 à 94 °C en 15 minutes environ, puis maintenue à 94 °C jusqu'à la fin de la réaction.

On introduit ensuite conjointement, pendant 30 minutes, dans le milieu réactionnel, du silicate de sodium aqueux du type décrit ci-avant, à un débit de 2,4 I/mn, et de l'acide sulfurique également du type décrit ci-avant, à un débit régulé de manière à maintenir le pH, pendant la période d'introduction, à une valeur constamment égale à 8,0 ± 0,1.

Après cette addition simultanée, on y introduit ensuite, pendant 12 minutes, à un débit de 9,3 l/mn, une soulution aqueuse contenant 85 g/l de sulfate de zinc. A l'issue de cette addition, on introduit dans le milieu réactionnel une solution aqueuse contenant 180 g/l de soude, jusqu'à ce que le pH du milieu réactionnel soit égal à 8,0.

On arrête ensuite l'introduction de soude et on maintient le milieu réactionnel pendant 10 minutes sous agitation.

Puis on introduit de l'acide sulfurique du type décrit ci-avant, jusqu'à ce que le pH du milieu réactionnel soit égal à 7,1.

On arrête ensuite l'introduction d'acide et on procède à un mûrissement du milieu réactionnel pendant 5 minutes à une température de 94 °C.

La durée totale de la réaction est de 128 minutes.

On obtient ainsi une bouillie ou suspension de silice précipitée qui est ensuite filtrée et lavée au moyen d'un filtre presse.

Le gâteau obtenu est ensuite fluidifié par action mécanique et chimique (ajout simultané d'acide sulfurique et d'une quantité d'aluminate de sodium correspondant à un rapport pondéral Al/SiO₂ de 0,20 %). Après cette opération de délitage, la bouillie résultante, de pH égal à 8,4 et de perte au feu égale à 78,0 % (donc un taux de matière sèche de 22,0 % en poids), est atomisée au moyen d'un atomiseur à buses.

Les caractéristiques de la silice obtenue P1 sous forme de billes sensiblement sphériques sont alors les suivantes :
- surface spécifique CTAB 151 m²/g
- surface spécifique BET 158 m²/g
- prise d'huile DOP 262 ml/100g
- teneur pondéral en zinc 1,80 %
- volume poreux V1 représenté par les pores de d ≤ 400 Å 0,92 cm³/g
- volume poreux V2 représenté par les pores 175 Å ≤ d ≤ 275 Å 0,47 cm³/g
- rapport V2/V1 51 %
- pH 8,5
- taille moyenne des particules 260 µm

Le nombre N de molécules d'acide stéarique consommées par nm² de surface de silice, lorsque l'on fait réagir de l'acide stéarique avec de ladite silice P1 dans du xylène pendant 2 heures à 120 °C (conformément au mode opératoire exposé dans la description) est égal à 1,2.

On soumet la silice P1 au test de désagglomération tel que défini précédemment dans la description.

Après désagglomération aux ultra-sons, elle présente un diamètre médian (Ø₅₀) de 2,2 µm et un facteur de désagglomération aux ultra-sons (F_{D}) de 14,1 ml.

### EXEMPLE 3

Cet exemple illustre l'utilisation et le comportement d'une silice obtenue selon l'invention et d'une silice non conforme à l'invention dans une formulation pour caoutchouc industriel.

On utilise la formulation suivante (les parties sont exprimées en poids) :
- Caoutchouc SBR ⁽¹⁾ 50
- Caoutchouc KBR01 ⁽²⁾ 25
- Caoutchouc naturel SMR5L 25
- Silice 51
- ZnO actif ⁽³⁾ 1,82
- Acide stéarique 0,35
- 6PPD (4) 1,45
- CBS⁽⁵⁾ 1,1
- DPG (6) 1,4
- Soufre (7) 0,9
- Silane X50S ⁽⁸⁾ 8,13

(1) Copolymère styrène butadiène solution type Buna VSL 1955 S25
(2) Polybutadiène
(3) Oxyde de zinc qualité caoutchouc
(4) N-(diméthyl-1,3 butyl)-N'-phényl-p-phénylène diamine
(5) N-cyclohexyl 2-benzothiazyl sulfènamide
(6) Diphényl guanidine
(7) Agent vulcanisant
(8) Agent de couplage silice/caoutchouc (produit commercialisé par la Société DEGUSSA)

Les formulations sont préparées de la manière suivante :

Dans un mélangeur interne (type BANBURY), on introduit dans cet ordre et aux temps et températures du mélange indiqués entre parenthèses :
- du SBR, du KBR01 et du caoutchouc naturel (tₒ)(60 °C)
- le X50S et les 2/3 de la silice (tₒ + 1 mn)(80 °C)
- le ZnO, l'acide stéarique, le 6PPD et 1/3 de la silice (tₒ + 2 mn)(100 °C)

La décharge du mélangeur (tombée du mélange) se fait quand la température de la chambre atteint 165 °C (c'est-à-dire, à peu près tₒ + 5 mn 15 s). Le mélange est introduit sur un mélangeur à cylindres, maintenus à 30 °C, pour y être calandré. Sur ce mélangeur, on introduit le CBS, le DPG et le soufre.

Après homogénéisation et trois passages au fin, le mélange final est calandré sous la forme de feuilles de 2,5 à 3 mm d'épaisseur.

Les résultats des essais sont les suivants :

### 1- Propriétés rhéologiques

Les mesures sont réalisées sur les formulations à l'état cru.

Les résultats sont reportés dans le tableau I ci-dessous. On a indiqué l'appareillage utilisé pour conduire les mesures.

**TABLEAU I**

| | A1 | P1 |
|---|---|---|
| Consistance MOONEY ⁽¹⁾ | 105 | 92 |
| Couple mini (ln.lb) ⁽²⁾ | 25,0 | 20,8 |

| | | |
|---|---|---|
| (1) Viscosimètre MOONEY MV 2000E (mesure de Mooney Large (1+4) à 100 °C) | | |
| (2) Rhéomètre MONSANTO 100 S | | |

La formulation obtenue à partir de la silice obtenue selon l'invention conduit aux valeurs les plus faibles.

Ceci traduit une plus grande facilité de mise en oeuvre des mélanges préparés à partir des silices obtenues selon l'invention, en particulier au niveau des opérations d'extrusion et de calandrages souvent réalisées lors de la confection de compositions élastomériques (moindre dépense d'énergie pour mettre en oeuvre le mélange, plus grande facilité d'injection lors du mélangeage, moindre gonflement en filière lors de l'extrusion, moindre retrait au calandrage,...).

### 2- Propriétés mécaniques

Les mesures sont réalisées sur les formulations vulcanisées.

La vulcanisation est réalisée en portant les formulations à 150 °C pendant 40 minutes.

Les normes suivantes ont été utilisées :
(i) essais de traction (résistance à la rupture, allongement à la rupture)
   NFT 46-002 ou ISO 37-1977
(ii) essais de résistance à l'abrasion
   DIN 53-516

Les résultats obtenus sont consignés dans le tableau Il ci-dessous.

**TABLEAU II**

| | A1 | P1 |
|---|---|---|
| Résistance rupture (MPa) | 18,6 | 20.2 |
| Allongement rupture (%) | 456 | 521 |
| Résistance abrasion (mm³)⁽¹⁾ | 52 | 51 |

| | | |
|---|---|---|
| (1) la valeur mesurée est la perte à l'abrasion : plus elle est faible et meilleure est la résistance à l'abrasion. | | |

Ces derniers résultats montrent le bon effet de renforcement conféré par la silice obtenue selon l'invention.

Ainsi, tout en conduisant à des propriétés rhéologiques nettement meilleures, la silice obtenue selon l'invention procure des propriétés mécaniques au moins sensiblement équivalentes, voire même meilleures que celles obtenues avec la silice de l'art antérieur.

Le haut pouvoir renforçant de la silice obtenue selon l'invention est confirmé par les valeurs élevées obtenues pour la résistance à la rupture et l'allongement à la rupture.

De plus, on note que la silice obtenue selon l'invention présente un comportement satisfaisant au niveau de la résistance à l'abrasion.

### 3- Propriétés dynamiques

Les mesures sont réalisées sur les formulations vulcanisées.

La vulcanisation est obtenue en portant les formulations à 150 °C pendant 40 minutes. Les résultats (illustrant la tendance à l'échauffement) sont reportés dans le tableau III ci-dessous (plus la valeur est faible, moindre est la tendance à l'échauffement). On a indiqué l'appareillage utilisé pour conduire la mesure.

**TABLEAU III**

| | A1 | P1 |
|---|---|---|
| Tangente delta 70 °C ⁽¹⁾ | 0.140 | 0,125 |

| | | |
|---|---|---|
| (1) Visco-élasticimètre INSTRON | | |

La tendance à l'échauffement obtenu à partir de la silice obtenue selon l'invention est assez faible.

## Revendications

1. Procédé de préparation de silice précipitée destinée à être utilisée comme charge renforçante pour élastomères du type comprenant la réaction d'un silicate avec un agent acidifiant ce par quoi l'on obtient une suspension de silice précipitée, puis la séparation et le séchage de cette suspension, dans lequel on réalise la précipitation de la manière suivante:
(i) on forme un pied de cuve initial comportant un silicate et un électrolyte, la concentration en silicate (exprimée en SiO₂) dans ledit pied de cuve initial étant inférieure à 100 g/l et la concentration en électrolyte dans ledit pied de cuve initial étant inférieure à 17 g/l,
(ii) on ajoute l'agent acidifiant audit pied de cuve jusqu'à l'obtention d'une valeur du pH du milieu réactionnel d'au moins environ 7,
(iii) on ajoute au milieu réactionnel simultanément de l'agent acidifiant et un silicate,
et dans lequel on sèche une suspension présentant un taux de matière sèche d'au plus 24 % en poids, **caractérisé en ce que** ledit procédé comprend une des deux opérations (a) ou (b) suivantes :
(a) on ajoute, après l'étape (iii), au milieu réactionnel au moins un composé du zinc, puis un agent basique, et, lorsque ladite séparation comporte une filtration et un délitage du gâteau issu de cette fitration, ledit délitage est de préférence effectué en présence d'au moins un composé de l'aluminium,
(b) on ajoute, après l'étape (iii), au milieu réactionnel simultanément un silicate et au moins un composé du zinc et, lorsque ladite séparation comporte une filtration et un délitage du gâteau issu de cette fit ration, le délitage est de préférence effectué en présence d'au moins un composé de l'aluminium.

2. Procédé selon la revendication 1, comprenant la réaction d'un silicate avec un agent acidifiant ce par quoi l'on obtient une suspension de silice précipitée, puis la séparation et le séchage de cette suspension, dans lequel:
- on réalise la précipitation de la manière suivante :
(i) on forme un pied de cuve initial comportant un silicate et un électrolyte, la concentration en silicate (exprimée en SiO₂) dans ledit pied de cuve initial étant inférieure à 100 g/l et la concentration en électrolyte dans ledit pied de cuve initial étant inférieure à 17 g/l,
(il) on ajoute l'agent acidifiant audit pied de cuve jusqu'à l'obtention d'une valeur du pH du milieu réactionnel d'au moins environ 7,
(iii) on ajoute au milieu réactionnel simultanément de l'agent acidifiant et un silicate,
- puis, on effectue les étapes successives suivantes :
(iv) on ajoute au milieu réactionnel au moins un composé du zinc,
(v) on ajoute au milieu réactionnel un agent basique, de préférence jusqu'à l'obtention d'une valeur du pH du milieu réactionnel comprise entre 7,4 et 10, en particulier entre 7,8 et 9,
(vi) on ajoute au milieu réactionnel de l'agent acidifiant, de préférence jusqu'à l'obtention d'une valeur du pH du milieu réactionnel d'au moins 7, en particulier comprise entre 7 et 8,5,
- la séparation comporte une filtration et un délitage du gâteau issu de la filtration, le délitage étant effectué en présence d'au moins un composé de l'aluminium,
- on sèche une suspension présentant un taux de matière sèche d'au plus 24 % en poids.

3. Procédé selon la revendication 2, **caractérisé en ce que**, entre l'étape (iii) et l'étape (iv), on ajoute au milieu réactionnel de l'agent acidifiant, de préférence jusqu'à l'obtention d'une valeur du pH du milieu réactionnel comprise entre 3 et 6,5.

4. Procédé selon la revendication 1, comprenant la réaction d'un silicate avec un agent acidifiant ca par quoi l'on obtient une suspension de silice précipitée, puis la séparation et le séchage de cette suspension, dans lequel on réalise la précipitation de la manière suivante:
(i) on forme un pied de cuve initial comportant un silicate et un électrolyte, la concentration en silicate (exprimée en SiO₂) dans ledit pied de cuve initial étant inférieure à 100 g/l et la concentration en électrolyte dans ledit pied de cuve initial étant inférieure à 17 g/l,
(ii) on ajouté l'agent acidifiant audit pied de cuve jusqu'à l'obtention d'une valeur du pH du milieu réactionnel d'au moine environ 7.
(iii) on ajoute au milieu réactionnel simultanément de l'agent acidifiant et un silicate,
(iv) on ajoute au milieu réactionnel simultanément un silicate et au moins un composé du zinc,
et dans lequel on sèche une suspension présentant un taux de matière sèche d'au plus 24 %.

5. Procédé selon la revendication 4, **caractérisé en de que**, après l'étape (iv), on ajoute au milieu réactionnel de l'agent acidifiant.

6. Procédé selon l'une des revendications 4 et 5, **caractérisé en ce que** la séparation comporte une filtration et un délitage du gâteau issu de la fitration, le délitage étant effectué en présence d'au moins un composé de l'aluminium.

7. Procédé selon l'une des revendications 1 à 6, **caractérisé en ce que** la quantité de composé du zinc utilisée est telle que la silice précipitée préparée contient entre 1 et 5 % en poids de zinc.

8. Procédé selon l'une des revendications 1 à 7, **caractérisé en ce que** le composé du zinc est un sel organique ou inorganique du zinc, le sel organique étant de préférence choisi parmi les sels d'acides carboxyliques ou polycarboxyliques, et le sel inorganique étant de préférence choisi parmi les halogénures, les oxyhalogénures, les nitrates, les phosphates, les sulfates et les oxysulfates.

9. Procédé selon l'une des revendications 1 à 8, **caractérisé en ce que** la composé de zinc est un sulfate de zinc.

10. Procédé selon l'une des revendications 1 à 9, **caractérisé en ce que** le composé de l'aluminium est un aluminate de métal alcalin.

11. Procédé selon l'une des revendications 1 à 10, **caractérisé en ce que** le composé de l'aluminium est un aluminate de sodium.

12. Procédé selon l'une des revendications 1 à 11, **caractérisé en ce que** ladite séparation comprend une filtration effectuée au moyen d'un filtre presse.

13. Procédé selon l'une des revendications 1 à 12, **caractérisé en ce que** ledit séchage est effectué par atomisation.

14. Procédé selon la revendication 13, **caractérisé en ce qu'**on sèche une suspension présentant un taux de matière sèche supérieur à 15 % en poids, de préférence supérieur à 17 % en poids.

15. Procédé selon l'une des revendications 12 à 14, **caractérisé en ce que** ledit séchage est effectué au moyen d'un atomiseur à buses.

16. Procédé selon l'une des revendications 12 à 15, **caractérisé en ce que le** produit séché est ensuite broyé.

17. Procédé selon la revendication 18, **caractérisé en ce que** le produit broyé est ensuite aggloméré.

18. Procédé selon la revendication 13, **caractérisé en ce qu'**on sèche une suspension présentant un taux de matière sèche d'au plus 15 % en poids.

19. Procédé selon la revendication 18, **caractérisé en ce que** le produit séché est ensuite aggloméré.

## Claims

1. A process for preparing a precipitated silica intended to be used as a reinforcing filler for elastomers, of the type comprising reacting a silicate with an acidifying agent so as to obtain a suspension of precipitated silica, then separating and drying that suspension, in which precipitation is carried out as follows:
(i) an initial stock comprising a silicate and an electrolyte is formed, the concentration of silicate (expressed as SiO₂) in said initial stock being less than 100 g/l and the electrolyte concentration in said initial stock being less than 17 g/l;
(ii) the acidifying agent is added to the stock until the pH of the reaction medium reaches a value of at least about 7;
(iii) acidifying agent and a silicate are simultaneously added to the reaction medium;
and in which a suspension with a dry matter content of at most 24% by weight is dried;
**characterized in that** said process comprises one of the two following operations a) or b):
(a) after step (ili), at least one zinc compound is added to the reaction medium followed by a basic agent and, when said separation comprises filtration and disintegration of the cake from that filtration, said disintegration preferably being carried out in the presence of at least one aluminium compound;
b) after step (iii), a silicate and at least one zinc compound are simultaneously added to the reaction medium and when said separation comprises filtration and disintegration of the cake from that filtration, the disintegration is preferably carried out in the presence of at least one aluminium compound.

2. A process according to claim 1, comprising reacting a silicate with an acidifying agent so as to obtain a suspension of precipitated silica, then separating and drying that suspension, in which:
• precipitation is carried out as follows:
(ii) an initial stock comprising a silicate and an electrolyte is formed, the concentration of silicate (expressed as SiO2) in said initial stock being less than 100 g/l and the electrolyte concentration in said initial stock being less than 17 g/l;
(iii) the acidifying agent is added to the stock until the pH of the reaction medium reaches a value of at least about 7;
(iv) acidifying agent and a silicate are simultaneously added to the reaction medium;
• then the following successive steps are carried out:
(v) at least one zinc compound is added to the reaction medium;
(vi) a basic agent is added to the reaction medium, preferably until the pH of the reaction medium reaches a value of the range 7.4 to 10. in particular 7.8 to 9;
(vii) acidifying agent is added to the reaction medium preferably until the pH of the reaction medium reaches a value of at least 7, preferably in the range 7 to 8.5;
• separation comprises filtration and disintegration of the cake resulting from filtration, disintegration being carried out in the presence of at least one aluminium compound:
• a suspension with a dry matter content of at most 24% by weight is dried.

3. A process according to claim 2, **characterized in that** acidifying agent is added to the reaction medium between step (iii) and step (iv), preferably until the pH of the reaction medium reaches a value in the range 3 to 6.5.

4. A process according to claim 1, comprising reacting a silicate with an acidifying agent so as to obtain a suspension of precipitated silica, then separating and drying that suspension, in which precipitation is carried out.as follows:
(iv) an initial stock comprising a silicate and an electrolyte is formed, the concentration of silicate (expressed as SiO₂) in said initial stock being less than 100 g/l and the electrolyte concentration in said initial stock being less than 17 g/l;
(v) acidifying agent is added to the stock until the pH of the reaction medium reaches at least about 7;
(vi) acidifying agent and a silicate are simultaneously added to the reaction medium;
(vii) a silicate and at least one zinc compound are simultaneously added to the reaction medium;
and in which a suspension with a dry matter content of at most 24% is dried.

5. A process according to claim 4, **characterized in that** after step (iv), acidifying agent is added to the reaction medium.

6. A process according to claim 4 or claim 5, **characterized in that** separation comprises filtration and disintegration of the cake resulting from filtration disintegration being carried out in the presence of at least one aluminium compound.

7. A process according to any one of claims 1 to 6, **characterized in that** the quantity of zinc compound used is such that the precipitated silica prepared contains between 1% and 5% by weight of zinc.

8. A process according to any one of claims 1 to 7, **characterized in that** the zinc compound is an organic or inorganic zinc salt, the organic zinc salt preferably being selected from salts of carboxylic or polycarboxylic acids, and the inorganic salt preferably being selected from halides, oxyhalides, nitrates, phosphates, sulphates and oxysulphates.

9. A process according to any one of claims 1 to 8, **characterized in that** the zinc compound is a zinc sulphate.

10. A process according to any one of claims 1 to 9, **characterized in that** the aluminium compound is an alkali metal aluminate.

11. A process according to any one of claims 1 to 10, **characterized in that** the aluminium compound is a sodium aluminate.

12. A process according to any one of claims 1 to 11, **characterized in that** said separation comprises filtration carried out using a filter press.

13. A process according to any one of claims 1 to 12, **characterized in that** said drying is carried out by spraying.

14. A process according to claim 13, **characterized in that** a suspension with a dry matter content of over 15% by weight, preferably over 17% by weight, is dried.

15. A process according to any one of claims 12 to 14, **characterized in that** said drying is carried out using a nozzle sprayer.

16. A process according to any one of claims 12 to 15. **characterized in that** the dried product is subsequently ground.

17. A process according to claim 16, **characterized in that** the ground product is subsequently agglomerated.

18. A process according to claim 13, **characterized in that** a suspension with a dry matter content of at most 15% by weight is dried.

19. A process according to claim 18, **characterized in that** the dried product is then agglomerated.

## Patentansprüche

1. Verfahren zur Herstellung von Fällungskieselsäure benutzt zu sein vorgesehen als verstärkender Füllstoff für Elastomere, des Typs, der die Reaktion eines Silicates mit einem säurebildenden Mittel umfaßt, wodurch man eine Suspension von Fällungskieselsäure erhält, und anschließende Abtrennung und Trocknung dieser Suspension, wobei man die Fällung in der folgenden Art und Weise realisiert:
(i) man bildet einen Ausgangsansatz, der ein Silicat und einen Elektrolyten umfaßt, wobei die Konzentration an Silicat (ausgedrückt in SiO₂ in dem genannten Ausgangsansatz unter 100 g/l und die Konzentration an Elektrolyt in dem genannten Ausgangsansatz unter 17 g/l betragen,
(ii) man gibt das säurebildende Mittel zu dem genannten Ansatz, bis man einen pH-Wert des Reaktionsmediums von mindestens etwa 7 erhält,
(iii) man gibt zu dem Reaktionsmedium gleichzeitig das säurebildende Mittel und ein Silicat,
und bei dem man eine Suspension trocknet, die einen Gehalt an Trockensubstanz von höchstens 24 Gew.-% aufweist,
**dadurch gekennzeichnet, daß** das genannte Verfahren eine der zwei folgenden Operationen (a) oder (b) umfaßt:
(a) man gibt nach der Stufe (iii) zu dem Reaktionsmedium mindestens eine Zinkverbindung und anschließend ein basisches Mittel, und wenn die genannte Abtrennung eine Filtration und ein Zerteilen des von dieser Filtration stammenden Kuchens umfaßt, so wird das genannte Zerteilen vorzugsweise in Anwesenheit von mindestens einer Aluminiumverbindung durchgeführt,
(b) man gibt nach der Stufe (iii) zu dem Reaktionsmedium gleichzeitig ein Silicat und mindestens eine Zinkverbindung, und wenn die genannte Abtrennung eine Filtration und ein Zerteilen des von dieser Filtration stammenden Kuchens umfaßt, so wird das Zerteilen vorzugsweise in Anwesenheit von mindestens einer Aluminiumverbindung durchgeführt.

2. Verfahren nach Anspruch 1, umfassend die Reaktion eines Silicates mit einem säurebildenden Mittel, wodurch man eine Suspension von Fällungskieselsäure erhält, und anschließende Abtrennung und Trocknung dieser Suspension, wobei man:
- die Fällung in der folgenden Art und Weise realisiert:
(i) man bildet einen Ausgangsansatz, der ein Silicat und einen Elektrolyten umfaßt, wobei die Konzentration an Silicat (ausgedrückt in SiO₂) in dem genannten Ausgangsansatz unter 100 g/l und die Konzentration an Elektrolyt in dem genannten Ausgangsansatz unter 17 g/l betragen,
(ii) man gibt das säurebildende Mittel zu dem genannten Ansatz, bis man einen pH-Wert des Reaktionsmediums von mindestens etwa 7 erhält,
(iii) man gibt zu dem Reaktionsmedium gleichzeitig das säurebildende Mittel und ein Silicat,
- anschließend die nachstehenden aufeinanderfolgenden Stufen durchführt:
(iv) man gibt zu dem Reaktionsmedium mindestens eine Zinkverbindung,
(v) man gibt zu dem Reaktionsmedium ein basisches Mittel, vorzugsweise bis zum Erhalten eines pH-Wertes des Reaktionsmediums zwischen 7,4 und 10, insbesondere zwischen 7,8 und 9,
(vi) man gibt zu dem Reaktionsmedium ein säurebildendes Mittel, vorzugsweise bis zum Erhalten eines pH-Wertes des Reaktionsmediums von mindestens 7, insbesondere zwischen 7 und 8,5, - wenn die Abtrennung eine Filtration und ein Zerteilen des von dieser Filtration stammenden Kuchens umfaßt, das Zerteilen vorzugsweise in Anwesenheit von mindestens einer Aluminiumverbindung durchführt,
- eine Suspension trocknet, die einen Gehalt an Trockensubstanz von höchstens 24 Gew.-% aufweist.

3. Verfahren nach Anspruch 2, **dadurch gekennzeichnet, daß** man zwischen der Stufe (iii) und der Stufe (iv) zu dem Reaktionsmedium das säurebildende Mittel gibt, vorzugsweise bis zum Erhalten eines pH-Wertes des Reaktionsmediums zwischen 3 und 6,5.

4. Verfahren nach Anspruch 1, umfassend die Reaktion eines Silicates mit einem säurebildenden Mittel, wodurch man eine Suspension von Fällungskieselsäure erhält, und anschließende Abtrennung und Trocknung dieser Suspension, wobei man die Fällung in der folgenden Art und Weise realisiert:
(i) man bildet einen Ausgangsansatz, der ein Silicat und einen Elektrolyten umfaßt, wobei die Konzentration an Silicat (ausgedrückt in SiO₂) in dem genannten Ausgangsansatz unter 100 g/l und die Konzentration an Elektrolyt in dem genannten Ausgangsansatz unter 17 g/l betragen,
(ii) man gibt das säurebildende Mittel zu dem genannten Ansatz, bis man einen pH-Wert des Reaktionsmediums von mindestens etwa 7 erhält,
(iii) man gibt zu dem Reaktionsmedium gleichzeitig das säurebildende Mittel und ein Silicat,
(iv) man gibt zu dem Reaktionsmedium gleichzeitig ein Silicat und mindestens eine Zinkverbindung,
und bei dem man eine Suspension trocknet, die einen Gehalt an Trockensubstanz von höchstens 24 Gew.-% aufweist.

5. Verfahren nach Anspruch 4, **dadurch gekennzeichnet, daß** man nach der Stufe (iv) zu dem Reaktionsmedium das säurebildende Mittel gibt.

6. Verfahren nach einem der Ansprüche 4 und 5, **dadurch gekennzeichnet, daß** die Abtrennung eine Filtration und ein Zerteilen des von dieser Filtration stammenden Kuchens umfaßt, wobei das Zerteilen in Anwesenheit von mindestens einer Aluminiumverbindung durchgeführt wird.

7. Verfahren nach einem der Ansprüche 1 bis 6, **dadurch gekennzeichnet, daß** die Menge der verwendeten Zinkverbindung so bemessen ist, daß die hergestellte Fällungskieselsäure zwischen 1 Gew.-% und 5 Gew.-% Zink enthält.

8. Verfahren nach einem der Ansprüche 1 bis 7, **dadurch gekennzeichnet, daß** die Zinkverbindung ein organisches oder anorganisches Zinksalz ist, wobei das organische Salz vorzugsweise ausgewählt wird unter den Salzen von Carbonsäuren oder Polycarbonsäuren, und das anorganische Salz vorzugsweise ausgewählt wird unter den Halogeniden, den Oxyhalogeniden, den Nitraten, den Phosphaten, den Sulfaten und den Oxysulfaten.

9. Verfahren nach einem der Ansprüche 1 bis 8, **dadurch gekennzeichnet, daß** die Zinkverbindung ein Zinksulfat ist.

10. Verfahren nach einem der Ansprüche 1 bis 9, **dadurch gekennzeichnet, daß** die Aluminiumverbindung ein Alkalimetallaluminat ist.

11. Verfahren nach einem der Ansprüche 1 bis 10, **dadurch gekennzeichnet, daß** die Aluminiumverbindung ein Natriumaluminat ist.

12. Verfahren nach einem der Ansprüche 1 bis 11, **dadurch gekennzeichnet, daß** die genannte Abtrennung eine Filtration umfaßt, durchgeführt mit Hilfe einer Filterpresse.

13. Verfahren nach einem der Ansprüche 1 bis 12, **dadurch gekennzeichnet, daß** die genannte Trocknung durch Versprühen durchgeführt wird.

14. Verfahren nach Anspruch 13, **dadurch gekennzeichnet, daß** man eine Suspension trocknet, die einen Gehalt an Trockensubstanz von über 15 Gew.-%, vorzugsweise von über 17 Gew.-% aufweist.

15. Verfahren nach einem der Ansprüche 12 bis 14, **dadurch gekennzeichnet, daß** die genannte Trocknung mit Hilfe eines Düsenzerstäubers durchgeführt wird.

16. Verfahren nach einem der Ansprüche 12 bis 15, **dadurch gekennzeichnet, daß** das getrocknete Produkt anschließend zerkleinert wird.

17. Verfahren nach Anspruch 16, **dadurch gekennzeichnet, daß** das zerkleinerte Produkt anschließend agglomeriert wird.

18. Verfahren nach Anspruch 13, **dadurch gekennzeichnet, daß** man eine Suspension trocknet, die einen Gehalt an Trockensubstanz von höchstens 15 Gew.-% aufweist.

19. Verfahren nach Anspruch 18, **dadurch gekennzeichnet, daß** das getrocknete Produkt anschließend agglomeriert wird.
